# EUROPÄISCHE PATENTSCHRIFT

(11) **EP 0 528 341 B1**
(45) Veröffentlichungstag und Bekanntmachung des Hinweises auf die Patenterteilung: **17.01.1996**
(21) Anmeldenummer: 92113713.9
(22) Anmeldetag: 12.08.1992
(51) Int. Cl.: H02B 1/052

(54) **Vorrichtung zur lösbaren Befestigung eines Gerätegehäuses an einer Profilschiene**
Device for detachably fixing an apparatus housing to a mounting rail
Dispositif pour la fixation détachable d'un boîtier d'appareil à un rail profilé

(30) Priorität: 17.08.1991 DE 4127252
(43) Veröffentlichungstag der Anmeldung: 24.02.1993
(73) Patentinhaber: Gossen- Metrawatt GmbH, D-8500 Nürnberg (DE)
(72) Erfinder: Feuerlein, Friedhelm, W-8500 Nürnberg 50 (DE); Müller, Helmut, W-8500 Nürnberg 80 (DE)
(74) Vertreter: Hafner, Dieter, Dr.rer.nat., Dipl.-Phys.

(56) Entgegenhaltungen:
- EP-A- 0 327 708
- EP-A- 0 373 627
- DE-A- 2 912 076
- DE-A- 3 149 310
- DE-A- 3 732 434
- FR-A- 2 239 075
- FR-A- 2 652 205

## Beschreibung

Die Erfindung betrifft eine Vorrichtung zur lösbaren Befestigung eines Gerätegehäuses an einer Profilschiene, vorzugsweise einer Hutschiene, mit den weiteren Merkmalen des Oberbegriffs des Patentanspruchs 1.

Aus der gattungsbildenden DE 37 32 434 A1 geht eine Vorrichtung zur lösbaren Befestigung eines Gerätegehäuses an einer Profilschiene hervor, die die Form einer sogenannten Hutschiene hat und die an einer Wand- oder Bodenfläche angebracht werden kann. Die Vorrichtung weist die Profilschiene zangenartig erfassende, auf Führungsleisten gleitende Klemmteile auf, die durch Federkraft in ihrer Klemmstellung gehalten werden und zum Lösen entgegen der Wirkrichtung dieser Federkraft in eine Öffnungsstellung verschiebbar sind. Dabei ist mindestens ein gegenüber dem Gerätegehäuse verschiebbares Arretierteil vorgesehen, das in mindestens zwei verschiedenen Stellungen gegenüber dem Gehäuse verankert werden kann. Zwischen dem Arretierteil und dem Klemmteil ist ferner eine Feder angeordnet.

Der Erfindung liegt die Aufgabe zugrunde, eine Vorrichtung mit den Merkmalen des Oberbegriffs des Anspruchs 1 zu schaffen, die relativ einfach aufgebaut ist und mit der eine besonders sichere, aber dennoch leicht zu lösende Gehäusebefestigung erreicht wird. Diese Aufgabe wird durch die kennzeichnenden Merkmale des Anspruchs 1 dadurch gelöst, daß das Arretierteil mit dem Klemmteil so gekoppelt ist, daß der gegenseitige Abstand beider Teile durch das Verschieben des Arretiertes in mindestens zwei Stellungen veränderbar ist und das in einer dieser Stellungen das Klemmteil durch das Arretierteil angeordnet ist, daß sich dieses nicht in die Öffnungsstellung, zum Lösen des Gerätegehäuses von der Profilschiene, verschieben läßt.

Durch die erfindungsgemäße Kopplung von Arretierteil und Klemmteil wird erreicht, daß sich das Gehäuse auch unter Einwirkung hoher Kräfte nicht unbeabsichtigt lösen läßt. Besonders einfach wird die Arretierung dadurch, daß das Arretierteil gegenüber dem Gerätegehäuse verschiebbar ausgebildet ist.

In vorteilhafter Weiterbildung des Erfindungsgegenstandes ist die zwischen Arretierteil und Klemmteil wirkende Kopplung so aufgebaut, daß beide Teile gemeinsam zwischen zwei Führungsleisten in den durch sie ausgebildeten Führungsnuten in Verschieberichtung geführt sind. Zum Verbinden des Arretierteils mit dem Klemmteil besitzt mindestens eines der beiden Teile einen Greifarm, der an einem Greifansatz des anderen Teils so angreift, daß hierdurch der maximale Abstand zwischen den beiden Teilen definiert ist. Der gegenseitige Abstand kann jedoch durch Verschieben der beiden Teile aufeinander zu, entgegen der Federkraft einer sie auseinanderdrückenden Feder, vorzugsweise einer Schraubenfeder, verringert werden.

Die verschiedenen Stellungen der beiden Teile zueinander werden durch mehrere Anschläge bestimmt, die zur Stellungsänderung gegebenenfalls durch federnde Rastmittel gebildet sind. In einer ersten, das Klemmteil blockierenden Stellung wird das Arrtierteil so dicht an das Klemmteil herangeführt, daß es dessen Verschiebung in die Öffnungsstellung verhindert. Diese Arretierstellung des Befestigungsadapters gewährleistet auch unter ungünstigen Bedingungen, zum Beispiel bei starken Vibrationen, eine gegen Selbstlösung sichere Befestigung des Gehäuses an der Profilschiene.

Bei einer zweiten Stellung ist der Abstand zwischen den beiden Teilen so festgelegt, daß das Klemmteil gegen die Kraft der die Teile auseinanderdrückenden Feder in die Öffnungsstellung verschiebbar ist. Diese Stellung entspricht in ihrer Wirkung somit bekannten Ausführungen, bei denen das Gehäuse in einer Richtung gegen die Kraft einer Feder gezogen werden muß, um eines der beiden Klemmteile von der Hutschiene lösen zu können. Dies ist allerdings nur mit Hilfe einer Schwenkbewegung realisierbar, wobei das Gehäuse um die Eingriffstelle des anderen Klemmteils herumgeschwenkt werden muß.

Bei unmittelbar an einer Wand befestigten Profilschienen ist eine derartige Schwenkbewegung jedoch nicht durchführbar, so daß in Weiterbildung des Erfindungsgegenstandes eine dritte Stellung vorgesehen ist, bei der der Abstand zwischen den beiden Teilen dem durch mindestens einen Greifarm bestimmten maximalen Abstand entspricht, so daß durch gemeinsames Verschieben der beiden Teile das Klemmteil ohne Überwindung einer Federkraft in die Öffnungsstellung verschoben werden kann. Die auf beiden Seiten zurückgezogenen Klemmteile ermöglichen nunmehr ein schwenkfreies Abnehmen des Gehäuses von der Profilschiene.

Bei einer zweckmäßigen Ausbildung des Klemmteils besitzt dieses einen Keilbalken, der eine die Profilschiene erfassende Klemmkante bildet und einen Klemmkörper, der vom Keilbalken beidseitig überragt wird, so daß die auf der Rückseite des Keilbalkens liegenden Balkenschultern einen Anschlag bilden, der in der Öffnungsstellung an den Führungsleisten anschlägt.

Einen zweiten, die Verschlußstellung des Klemmteils definierenden Anschlag kann in zweckmäßigerweise mindestens ein Gleithaken bilden, der beim Einschieben des Klemmteils in die Führungsnuten, in ein zugehöriges Rastloch der Grundplatte des Schienenhalters eingreift und in Klemmrichtung ein unerwünschtes Herausgleiten des Klemmteils aus den Führungsnuten verhindert. Die Gleithaken liegen in Hakenfenstern, die ihrerseits im Klemmkörper des Klemmteils ausgespart sind. Ein weiterhin im Klemmkörper vorgesehenes Federloch dient zur einseitigen Lagerung der zwischen Klemmteil und Arretierteil angeordneten Feder.

Vorteilhaft ist es, das Arretierteil so auszubilden, daß es entsprechend dem Klemmteil mit Führungsschienen in den Führungsnuten gleitbeweglich angeordnet ist und die zur Kopplung mit dem Klemmteil benötigten Greifarme trägt. An ihrem am Gleitkörper befestigten Ende sind die Greifarme mit Greifarmschultern versehen, die zusammen mit einem in jeder Führungsnut ausgebildeten Nutanschlag in Öffnungsrichtung ein Herausgleiten des Arretierteils aus der Führungsnut verhindern.

Um das Arretierteil in verschiedenen Raststellungen verankern zu können, besitzt es eine in einem Laschenfenster schwingbeweglich angeordnete, federnde Arretierlasche, die mindestens mit einem Rastzahn versehen ist, der in eine Rastmulde eingreift und an einer Anschlagkante anschlägt. Am freien Ende der Arretierlasche ist ein Betätigungssteg vorgesehen, der einen Zugriff solcher Art erlaubt, daß die Arretierlasche entgegen ihrer Federkraft aus ihrer Anschlagstellung befreit wird und damit eine Verschiebung des Arretierteils ermöglicht.

Besonders vorteilhaft ist es, das Arretierteil weiterhin so auszubilden, daß es in der dritten Stellung der beiden Teile mit seinem freien Ende über das Ende des Schienenhalters und damit auch über die Grundfläche des Gehäusekörpers hinausragt und in dieser Stellung die Möglichkeit bietet, über entsprechende im Arretierteil vorgesehene Löcher eine Schraubbefestigung des Gehäuses vorzunehmen.

Eine sehr wesentliche Verbesserung des Erfindungsgegenstandes sieht vor, daß das Klemmmteil und das Arretierteil an einem Schienenhalter befestigt sind, derart, daß ein austauschbarer Befestigungsadapter entsteht, der auf der Außenseite eines mit Haltezapfen versehenen Bodenteils des Gerätegehäuses lösbar befestigt ist. Der Befestigungsadapter kann an die Art der vorgesehenen Wand- oder Bodenbefestigung angepaßt und leicht am Gehäuse angebracht werden. Hierdurch ist es möglich, das Gehäuse einschließlich seiner Bodenplatte völlig unabhängig von der Art seiner späteren Befestigung zu gestalten und auch das ganze Gerät in Kommission oder auf Lager zu nehmen und dabei die Auswahl der Befestigungsvorrichtung zurückzustellen. Auch ein späterer Wechsel, z.B. bei der Umstellung einer Anlage, bringt keinerlei Propleme, da nur der richtige Adapter beschafft werden muß.

Es ist vorteilhaft das den Befestigungsadapter haltende Bodenteil so zu gestalten, daß es auf den Gehäusekörper von mindestens einer Seite aus aufschiebbar ist, wozu am Gehäusekörper einerseits und am Bodenteil andererseits ineinandergreifende Gleitschienen und Gleitnuten vorzusehen sind. Hierdurch wird ein sehr einfaches und schnelles Öffnen und Schließen des Gehäuses ohne Mittel zum Schrauben erreicht.

Besonders zweckmäßig ist es, wenn das Bodenteil aus zwei, vorzugsweise identisch ausgebildeten Bodenhalbteilen besteht, die von zwei sich gegenüberliegenden Seiten auf den Gehäusekörper aufgeschoben werden können und in der Gehäusemitte mit ihren Stoßkanten aufeinandertreffen.

Hierzu besitzt das Bodenteil vorzugsweise die Form einer flachen Schale, die durch ihre Trennung in die beiden Bodenhalbteile an einer Seite zum Aufschieben geöffnet ist. Die zum Aufschieben der beiden Bodenhalbteile ohnehin benötigten Gleitelemente wirken dabei wie eine mäanderförmige Dichtung, so daß das Gehäuse auch gut gegen Staub geschützt ist.

Zwei zusätzliche, parallel zu den beiden in Gleitrichtung liegenden Seitenwänden des Gehäuses angeordnete Leitschienen an den Bodenhalbteilen bilden für die Enden der hier eingreifenden Gehäusewände eine Laufnut und sorgen für eine ausreichende Seitenstabilität der Gehäusewände.

Um auch im Bereich der Stoßkante der beiden Bodenhalbteile eine gute Abdichtung nach außen zu erreichen, ist jede Bodenwand im Bereich ihrer Stoßkante mit einer Überlappungszunge versehen, die die halbe Breite und die halbe Wanddicke der übrigen Bodenwand besitzt und stufig so versetzt ist, daß zwei aufeinandertreffende, in ihrer Wandstärke halbierte Überlappungszungen sich zur Wandstärke der übrigen Bodenwand überlappend ergänzen.

Eine sichere Verbindung der beiden Bodenhalbteile zu einem gemeinsamen Bodenteil wird dadurch erreicht, daß im Bereich der jeweiligen Stoßkante jeweils ein Rasthaken und eine den Rasthaken verankernde Rastauflage vorgesehen ist, die beim Aufeinandertreffen der beiden Bodenhalbteile miteinander verrasten.

Um eine sichere Verbindung des Befestigungsadapters mit dem Bodenteil zu erreichen, sind auf der Außenseite der Bodenhalbteile entlang ihrer Gleitrichtung Haltezapfen angeformt, zwischen denen und der Bodenwand Haltenuten liegen. In diese passen zu einem Befestigungsadapter gehörige Gleitnocken, die an einem Schienenhalter angeformt sind.

Ein bequemes Aufsetzen des Befestigungsadapters auf das Bodenteil wird dadurch erreicht, daß die Haltezapfen und die Gleitnocken jeweils in einem solchen Abstand zueinander angeordnet sind, daß die Gleitnocken zwischen den Haltezapfen Platz finden, so daß beide zahnartig ineinandergreifen und durch eine kurze Parallelverschiebung zur Ebene der Bodenwand, die Gleitnocken innerhalb der Haltenuten bis zu einem Anschlag gleiten können.

Eine Arretierung des Befestigungsadapters am Bodenteil wird mit Hilfe einer Federlasche erreicht, die in einer Grundplatte des Schienenhalters durch eine Aussparung freigelegt ist. Die Federlasche besitzt eine Vertiefung, in die je ein im Bereich der Stoßkante an dem jeweiligen Bodenhalbteil angeformter, über die Ebene der Bodenwand hinausragender Haltenocken eintaucht. Da die Vertiefung beide Haltenocken erfaßt, werden gleichzeitig auch die beiden Bodenhalbteile zusammengehalten.

Ausführungsbeispiele der Erfindung sind in den Zeichnungen dargestellt und werden im folgenden näher beschrieben.

Es zeigen:
- Fig. 1: Ein Gehäuse mit Befestigungsvorrichtung seitlich im Schnitt,
- Fig. 2: das Gehäuse nach Fig. 1 von unten gesehen mit Blick auf die Befestigungsvorrichtung,
- Fig. 3: das Gehäuse nach Fig. 1 in einer zweiten Seitenansicht,
- Fig. 4: einen Gehäusekörper ohne Befestigungsvorrichtung seitlich im Schnitt,
- Fig. 5: den Gehäusekörper nach Fig. 4 von unten gesehen,
- Fig. 6: den Gehäusekörper in einer zweiten Seitenansicht im Schnitt,
- Fig. 7: ein Bodenhalbteil in Draufsicht auf die Außenseite,
- Fig. 8: das Bodenhalbteil nach Fig. 7 um 90° geschwenkt in Seitenansicht,
- Fig. 9: das Bodenhalbteil in einer zweiten Seitenansicht im Schnitt entlang der Schnittlinie B-B nach Fig. 7,
- Fig. 10: das Bodenhalbteil in Draufsicht auf die Innenseite,
- Fig. 11: das Bodenhalbteil seitlich im Schnitt entlang der Schnittlinie C-C,
- Fig. 12: ein komplett montierter Befestigungsadapter in Draufsicht,
- Fig. 13: der Befestigungsadapter seitlich im Schnitt,
- Fig. 14: der Befestigungsadapter in einer zweiten Seitenansicht im Schnitt,
- Fig. 15: ein Schienenhalter seitlich gesehen,
- Fig. 16: der Schienenhalter in Draufsicht auf seine dem Gehäuse zugewandte Innenseite,
- Fig. 17: der Schienenhalter seitlich im Schnitt entlang der Schnittlinie B-B nach Fig. 16,
- Fig. 18: der Schienenhalter in einer zweiten Seitenansicht im Schnitt entlang der Schnittlinie A-A nach Fig. 16,
- Fig. 19: ein Arretierteil in Seitenansicht,
- Fig. 20: das Arretierteil in Draufsicht auf seine dem Gehäuse zugewandte Innenseite,
- Fig. 21: das Arretierteil in einer zweiten Seitenansicht,
- Fig. 22: das Arretierteil in einer dritten Seitenansicht, im Schnitt,
- Fig. 23: ein Klemmteil in Seitenansicht,
- Fig. 24: das Klemmteil in Draufsicht auf seine dem Gehäuse zugewandte Innenseite,
- Fig. 25: das Klemmteil seitlich im Schnitt entlang der Schnittlinie A-A nach Fig. 24.

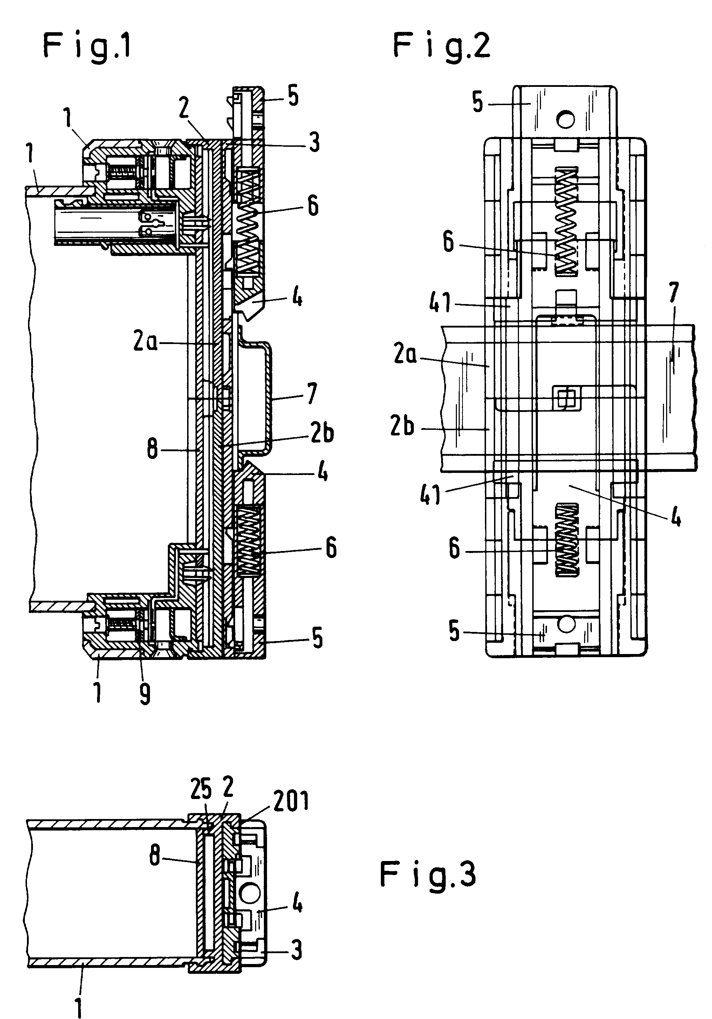

Wie die Figuren 1-3 erkennen lassen, ist ein aus einem Gehäusekörper 1 und einem Bodenteil 2 bestehendes Gerätegehäuse 1,2 mit einem Befestigungsadapter 3-6 ausgestattet, der an die Art der für das Gerätegehäuse 1,2 vorgesehenen Wand- oder Bodenbefestigung angepaßt ist. Im vorliegenden Beispiel ist der Befestigungsadapter 3-6 so gestaltet, daß das Gerätegehäuse 1,2 an einer Profilschiene 7, die hier als Hutschiene ausgeführt ist, befestigt werden kann.

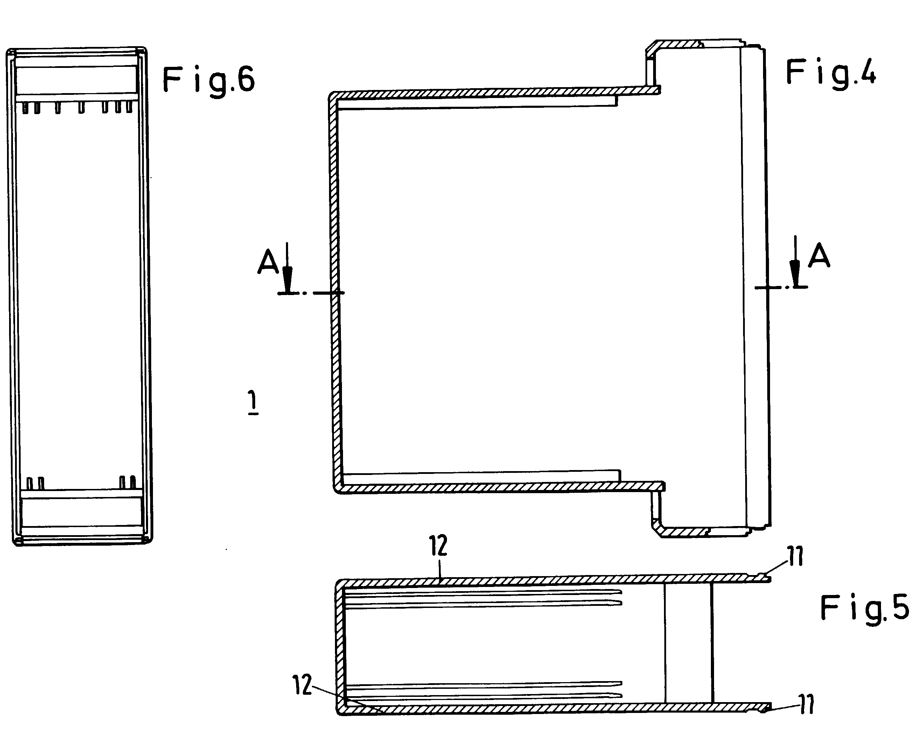

Der in den Figuren 4-6 dargestellte Gehäusekörper 1 dient zur Aufnahme eingeschobener Leiterplatten 8 und Anschlußklemmen 9, was hier nicht näher beschrieben werden soll, da diese Details für die Erfindung keine Bedeutung haben. Eine das Einschieben der Leiterplatten 8 ermöglichende Öffnung liegt im Bodenbereich des Gehäusekörpers 1, der an den freien Enden zweier sich gegenüberliegender Gehäusewände mit jeweils einer nach außen weisenden Gleitschiene 11 versehen ist und das Aufschieben zweier gleicher Bodenteile 2 = 2a,2b ermöglicht.

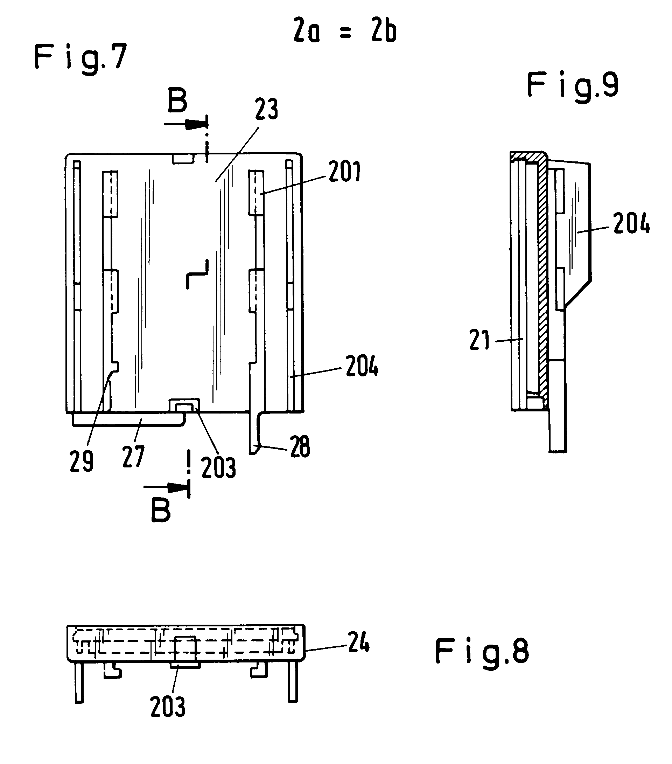

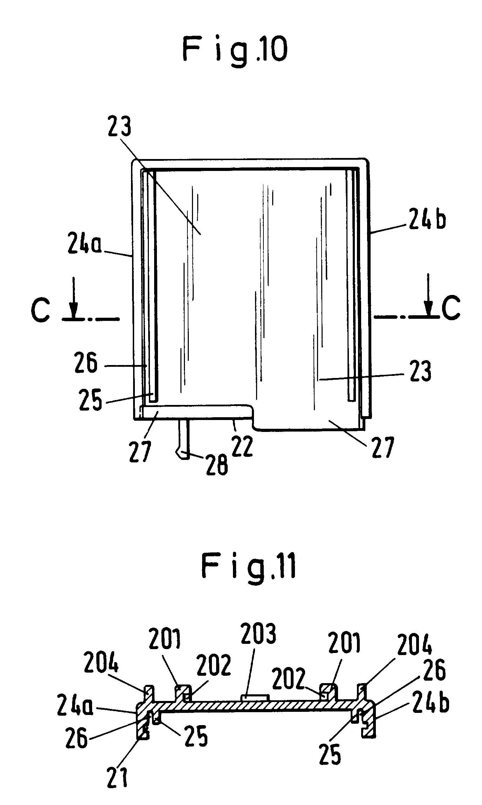

Das in den Figuren 7-11 dargestellte Bodenteil schafft die Voraussetzung dafür, daß einerseits der für die Befestigung des Gerätegehäuses 1,2 benötigte Befestigungsadapter 3-6 leicht am Gerätegehäuse 1,2 angebracht werden kann, und andererseits ein einfaches Öffnen des Gerätegehäuse 1,2 gewährleistet ist. Korrespondierend mit den Gleitschienen 11 am Gehäusekörper 1 ist das schalenartig geformte Bodenteil 2 auf der Innenseite zweier sich gegenüberliegender Seitenwände 24a,24b mit je einer Gleitnut 21 versehen. Parallel zu jeder Seitenwand 24 auf einer dazwischen liegenden Bodenwand 23 ist eine Leitschiene 25 angeordnet, die für eine gute Seitenstabilität der in einer Laufnut 26 gleitenden Seitenwände des Gehäusekörpers 1 sorgt, so daß die Seitenwände nicht nach innen gedrückt werden können. Durch das Ineinandergreifen von Nuten und Schienen ergibt sich eine mäanderförmige Verschlußkante zwischen Gehäusekörper 1 und Bodenteil 2, die für eine gute Abdichtung gegenüber eindringendem Staub sorgt.

Im Bereich ihrer Stoßkante 22 mit der die beiden Bodenteile 2 beim Aufschieben auf den Gehäusekörper 1 aufeinandertreffen, besitzen sie zwei bis zur Mitte des Bodenteils 2 reichende, versetzt zueinander angeordnete Überlappungszungen 27, die beim Aufeinandertreffen sich gegenseitig überlappen und gemeinsam eine der übrigen Bodenwand 23 entsprechende Wandstärke erreichen. Weiterhin sind im Bereich der Stoßkante 22 je ein Rasthaken 28 und eine zu dessen Verankerung dienende Rastauflage 29 vorgesehen, die beim Zusammenfügen der beiden Bodenteile 2 ineinandergreifen und diese zusammenhalten.

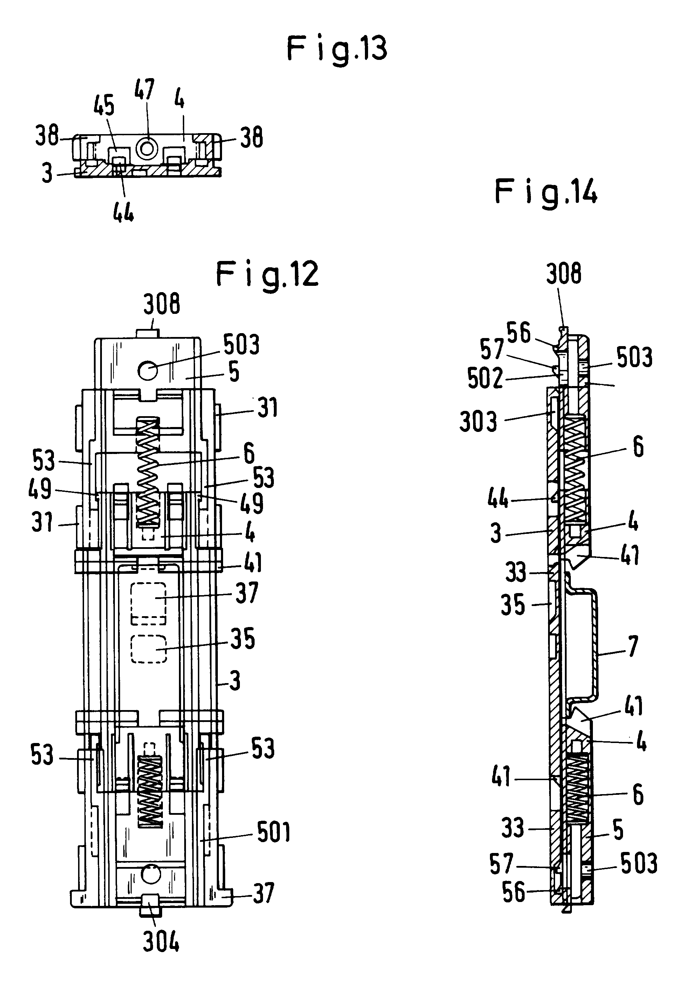

Zum Aufsetzen des in den Figuren 13-14 dargestellten Befestigungsadapters 3-6 auf die zusammengefügten Bodenteile 2, sind auf deren äußerer, von dem Gehäusekörper 1 abgewandten Seite beidseitig Haltezapfen 201 angeordnet, die zur Ausbildung von sich gegenüberliegenden Haltenuten 202 dienen, in die Gleitnocken 31 des Befestigungsadapters 3-6 passen. Die Gleitnocken 31 sind an einer Grundplatte 32 eines Schienenhalters 3, ebenso wie die Haltezapfen 201, im Abstand zueinander angeordnet, so daß sie in den verbliebenen Lücken des jeweils anderen Teiles 2,3 Platz finden. Beim Verbinden des Befestigungsadapters 3-6 mit den Bodenteilen 2 wird dieser zunächst senkrecht auf die Bodenteile 2 aufgesetzt, wobei Haltenocken 2o3 und Gleitnocken 31 in die jeweiligen Lücken eindringen und dann parallel zur Ebene der Bodenteile 2 zueinander so verschoben werden, daß die Gleitnocken 31 in die zugehörigen Haltenuten 202 gleiten.

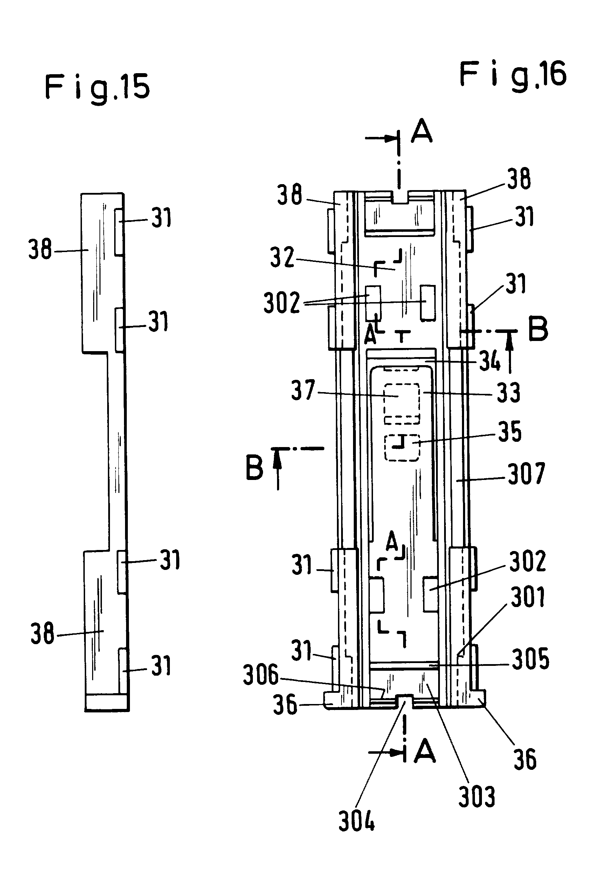

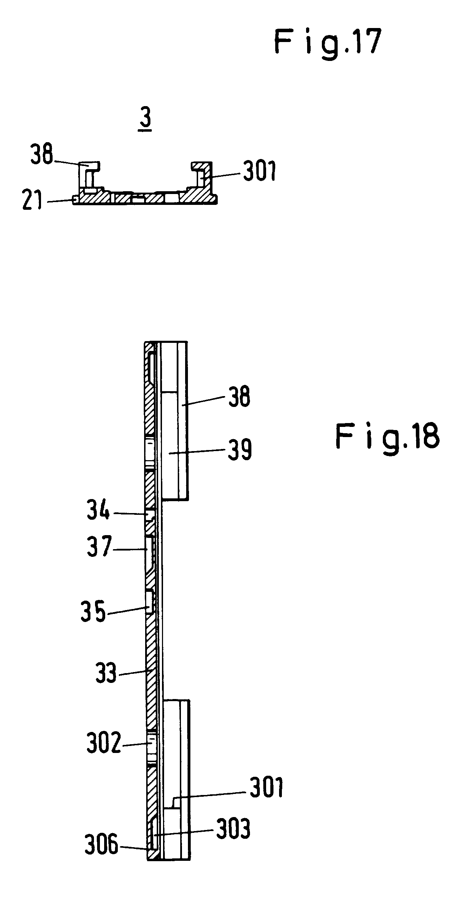

In der Grundplatte 32 des in den Figuren 15-18 dargestellten Schienenhalters 3 ist eine Aussparung 34 vorgesehen, in der eine Federlasche 33 liegt. Beim Einsetzen des Befestigungsadapters 3-6 verrastet die Federlasche 33 mit ihrer Vertiefung 35 an Haltenokken 203, von denen jeweils einer an der Stoßkante 22 des Bodenteils 2 angeformt ist. Da die Vertiefung 35 die Haltenocken 203 beider Bodenteile 2 erfaßt, wird deren Zusammenhalt zusätzlich gesichert. Das Einrasten der Haltenocken 203 wird dadurch erleichtert, daß der Vertiefung 35 eine Gleitmulde 37 vorgelagert ist, in der die Haltenocken 203 beim Aufsetzen des Befestigungsadapters 3-6 zunächst Platz finden und aus dem sie durch Anheben der Federlasche 33 zur Vertiefung 35 gleiten. Die eingerastete Federlasche 33 kann auch durch Anheben mit einem Werkzeug zum Lösen des Schienenhalters 3 entrastet werden.

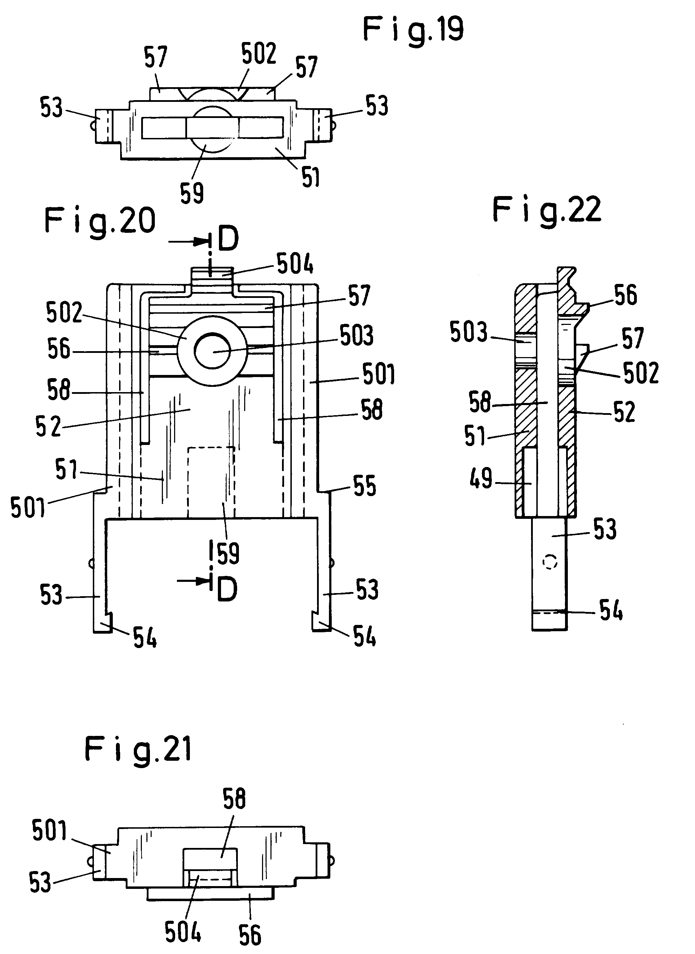

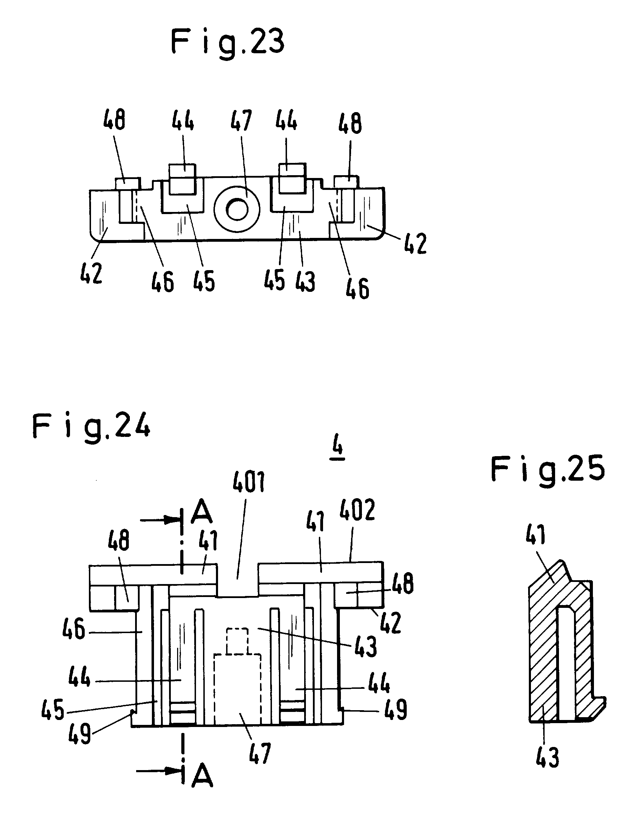

Der auf diese Weise bequem austauschbare Befestigungsadapter 3-6 besitzt bei seiner vorliegenden Ausbildung zur Profilschienenbefestigung außer dem Schienenhalter 3 noch jeweils zwei sich gegenüberliegend angeordnete in den Figuren 19-22 dargestellte Arretierteile 5 und in den Figuren 23-25 dargestellte Klemmteile 4, sowie eine zwischen den beiden Teilen 4, 5 angeordnete Feder 6.

Zur Befestigung der beiden Teile 4, 5 am Schienenhalter 3 sind an diesem, auf seiner äußeren, vom Gehäusekörper 1 abgewandten Seite, beidseitig sich gegenüberliegend im Bereich der beiden Enden des Schienenhalters 3, zwei Führungsleisten 38 angeformt, in denen Führungsnuten 39 ausgespart sind, die ihrerseits erste Führungsschienen 46 des Klemmteils 4 und zweite Führungsschienen 501 des Arretierteils 5 aufnehmen.

Das in den Figuren 23-25 dargestellte Klemmteil 4 besitzt einen Klemmkörper 43, an dem beidseitig die ersten Führungsschienen 46 ausgebildet sind, und dem in Klemmrichtung ein Keilbalken 41 vorgelagert ist, der mit seiner Klemmkante 402 an der Profilschiene 7 angreift. Der beidseitig über den Klemmkörper 43 hinausragende Keilbaiken 41 wirkt mit rückseitigen Balkenschultern 42 als Anschlag an den Führungsleisten 38, wodurch der Öffnungsabstand zwischen den beiden Klemmteilen 4 begrenzt wird. Ein die Verschlußstellung der beiden Klemmteile 4 definierender Verschlußabstand wird durch einen weiteren Anschlag begrenzt, den zwei Gleithaken 44 bewirken, die innerhalb eines im Klemmkörper 43 ausgesparten Hakenfensters 45 liegen. Diese Gleithaken 44 greifen in Rastlöcher 302 des Schienenhalters 3 ein, deren Länge den maximalen Gleitweg des Klemmteils 4 in Klemmrichtung bestimmt. Zwei am Keilbalken 41 angeformte Führungszapfen 48 passen in Zapfennuten 307 des Schienenhalters 3 und dienen zur Führungsstabilisierung.

Das in den Figuren 19-22 dargestellte Arretierteil 5 ist mit dem Klemmteil 4 durch zwei beidseitig an einem Gleitkörper 51 angeformte Greifarme 53 gleitbeweglich verbunden. An dem freien Ende jedes Greifarms 53 befindet sich ein Greifhaken 54, der an seinem Greifansatz 49 des Klemmteils 4 Halt findet und dadurch den maximalen Abstand zwischen den beiden Teilen 4,5 bestimmt. Das von der Mitte des Schienenhalters 3 aus entgegen der Klemmrichtung zwischen die Führungsleisten 38 eingesetzte Arretierteil 5 besitzt am anderen Ende jedes Greifarms 53 eine Greifarmschulter 55, mit der es an einen Nutenanschlag 301 anschlägt, so daß es nicht am Ende des Schienenhalters 3 aus den Gleitschienen 11 herausrutschen kann.

Im Gleitkörper 51 des Arretierteils 5 ist ein Laschenfenster 58 ausgespart, in dem eine Arretierlasche 52 mit einem ersten Rastzahn 56 und einem zweiten Rastzahn 57 liegt. Mit Hilfe der beiden Rastzähne 56,57, die in eine zugehörige, in der Grundplatte 32 des Schienenhalters 3 ausgesparte Rastmulde 303 eingreifen und sich an einer Anschlagkante 306 abstützen, kann das Arretierteil 5 in bezug zum Klemmteil 4 drei verschiedene Stellungen einnehmen.

In einer ersten, im unteren Teil der Figuren 12 und 14 dargestellten Stellung, ist das Arretierteil 5 so dicht an das Klemmteil 4 herangeführt, daß letzteres in seiner Klemmstellung arretiert ist. Hierbei hat sich der ersten Rastzahn 56 an der Anschlagkante 306 verankert und die zwischen den beiden Teile 4,5 liegende, in einem Federloch 47 des Klemmteils 4 und in einem Federraum 59 des Arretierteils 5 angeordnete Feder 6 ist am stärksten komprimiert. Die Arretierung gewährleistet, daß sich die Klemmvorrichtung des Befestigungsadapter 3-6 selbst bei starken, z.B. von einer Anlage ausgehenden Vibrationen nicht öffnen kann und somit das Gerätegehäuse 1,2 sicher mit der Profilschiene 7 verbunden bleibt.

In einer zweiten, nicht dargestellten Stellung, hat sich der zweite Rastzahn 57 an der Anschlagkante 306 verankert. Dabei wird die Feder 6 nur teilweise komprimiert, so daß die Möglichkeit besteht, durch Ziehen am Gerätegehäuse 1,2 in Öffnungsrichtung eines ersten Klemmteils 4, gegen die Kraft der Feder 6 des zweiten Klemmteils 4 und durch eine Schwenkbewegung des Gerätegehäuses 1,2, dieses von der Profilschiene 7 abzunehmen. Bei einer unmittelbar an einer Wand befestigten Hutschiene gelingt dies jedoch nicht, weil für die erforderliche Schwenkbewegung des Gerätegehäuses 1,2 kein Platz ist.

Es ist deshalb eine dritte, im oberen Teil der Figuren 12 und 14 dargestellte Stellung des Arretierteils 5 vorgesehen. In dieser kann das Arretierteil 5 bis zum Anschlag an den Greifarmschultern 55 aus den Führungsleisten 38 herausgezogen werden, so daß die beiden Teile 4,5 ihren größten, durch den Anschlag der Greifhaken 54 definierten Abstand zueinander erreichen. Die Feder 6 sorgt dafür, daß die beiden Teile 4,5 auf Abstand gehalten werden und gemeinsam in die Öffnungsstellung gezogen werden können, so daß ohne Überwindung einer Federkraft das Gerätegehäuse 1,2 in dieser Öffnungsstellung senkrecht zur Wand von der Hutschiene abgenommen werden kann.

In der Öffnungsstellung überragen die beiden Arretierteile 5 das Gerätegehäuse 1,2 soweit, daß diese mit entsprechenden Löchern 502,503 versehen, die Möglichkeit einer Schraubbefestigung bieten. Das in der Arretierlasche 52 ausgesparte größere Kopfloch 502 ermöglicht den Durchtritt eines Schraubenkopfes, der oberhalb des kleineren Schraubloches 503 in dem Gleitkörper 51 aufliegt. Zum Lösen der Arretierlasche 52 aus einer ihrer Klemmstellungen kann diese mit einem geeigneten Werkzeug, z.B. einem Schraubendreher, angehoben werden, was durch eine Betätigungsöffnung 304 und einen Betätigungssteg 504 erleichtert ist. Zur Entnahme des Arretierteils 5 kann dieses in Klemmrichtung aus den Führungsleisten 38 gezogen werden, wobei die Rastzähne 56,57 über eine Gleitkante 305 aus der Rastmulde 303 herausgleiten.

Der gleiche Befestigungsadapter 3-6 ist in Verbindung mit Gehäusen verwendbar, deren Breite etwa der des Befestigungsadapters 3-6 entspricht, aber auch solchen, die wesentlich breiter sind. Damit breitere Gehäuse, die nur teilweise auf dem Befestigungsadapter 3-6 aufliegen, nicht durch seitlich wirkende Kräfte aus ihrer Verankerung gerissen werden, sind die zugehörigen Bodenteile 2 beidseitig mit Stützstegen 204 versehen, mit denen sie sich an der entsprechenden Wand- oder Bodenfläche abstützen können. Weiterhin ist der Schienenhalter 3 an seinem unteren Ende, eine Wandmontage des Gerätegehäuse 1,2 vorausgesetzt, mit Haltefüßen 36 versehen, an denen sich das jeweilige Bodenteil 2 mit Haltezapfen 201 abstützen kann. Das Gewicht des Gerätegehäuses 1,2 muß somit nicht von der Federlasche 33 gehalten werden.

## Patentansprüche

1. Vorrichtung zur lösbaren Befestigung eines Gerätegehäuses (1, 2) an einer Profilschiene (7), vorzugsweise einer Hutschiene, die an einer Wand- oder Bodenfläche angebracht ist, mit die Profilschiene (7) zangenartig erfassenden, auf Führungsleisten (38) gleitenden Klemmteilen (4), die durch Federkraft in ihrer Klemmstellung gehalten werden und zum Lösen entgegen der Wirkrichtung dieser Federkraft in eine Öffnungsstellung verschiebbar sind, wobei mindestens ein gegenüber dem Gerätegehäuse (1, 2) verschiebbares Arretierteil (5) vorgesehen ist, das in mindestens zwei verschiedenen Stellungen gegenüber dem Gehäuse (1, 2) verankert werden kann und wobei eine Feder (6) zwischen dem Arretierteil (5) und dem Klemmteil (4) angeordnet ist,
**dadurch gekennzeichnet,**
daß das Arretierteil (5) mit dem Klemmteil (4) so gekoppelt ist, daß der gegenseitige Abstand beider Teile (4, 5) durch das Verschieben des Arretierteils (5) in mindestens zwei Stellungen veränderbar ist und, daß in einer dieser Stellungen das Klemmteil (4) durch das Arretierteil so blockiert ist, daß sich dieses nicht in die Öffnungsstellung, zum Lösen des Gerätegehäuses (1, 2) von der Profilschiene (7), verschieben läßt.

2. Vorrichtung nach Anspruch 1, dadurch gekennzeichnet, daß das Klemmteil (4) und das Arretierteil (5) gemeinsam zwischen zwei Führungsleisten (38) in den durch sie ausgebildeten Führungsnuten (39) in Verschieberichtung geführt sind, und mindestens ein Greifarm (53) des einen Teils an einem Greifansatz (49) des anderen Teils so angreift, daß hierdurch der maximale Abstand zwischen den beiden Teilen (4, 5) definiert ist, und dieser Abstand nur durch Verschieben der beiden Teile (4, 5) aufeinander zu, entgegen der Federkraft einer sie auseinanderdrückenden Feder (6), vorzugsweise einer Schraubenfeder, verringert werden kann.

3. Vorrichtung nach einem der vorhergehenden Ansprüche, dadurch gekennzeichnet, daß die verschiedenen Stellungen der beiden Teile (4, 5) zueinander durch verschiedene Anschläge (56, 57, 306) bestimmt werden, die zur Stellungsänderung gegebenenfalls durch federnde Rastmittel (52) gebildet sind, und daß in einer ersten, das Klemmteil (4) blockierenden Stellung das Arretierteil (5) so dicht an das Klemmteil (4) herangeführt ist, daß es dessen Verschiebung in die Öffnungsstellung blokkiert.

4. Vorrichtung nach einem der vorhergehenden Ansprüche, dadurch gekennzeichnet, daß in einer zweiten Stellung der Abstand zwischen den beiden Teilen (4, 5) so festgelegt ist, daß das Klemmteil (4) gegen die Kraft der die beiden Teile (4, 5) auseinanderdrückenden Feder (6) in die Öffnungsstellung verschiebbar ist.

5. Vorrichtung nach einem der vorhergehenden Ansprüche, dadurch gekennzeichnet, daß in einer dritten Stellung der Abstand zwischen den beiden Teilen (4, 5) dem durch mindestens einen Greifarm (53) bestimmten maximalen Abstand zwischen den beiden Teilen (4, 5) entspricht und in dieser Stellung durch gemeinsames Verschieben der beiden Teile (4, 5) das Klemmteil (4) ohne Überwindung einer Federkraft in die Öffnungsstellung verschiebbar ist.

6. Vorrichtung nach einem der vorhergehenden Ansprüche, dadurch gekennzeichnet, daß das Klemmteil (4) einen, ggf. durch eine Ausnehmung (401) unterbrochenen Keilbalken (41) besitzt, der durch seine vorzugsweise prismatische Form eine die Profilschiene (7) erfassende Klemmkante (402) bildet und einen ebenfalls zum Klemmteil (4) gehörigen, zwischen den Führungsleisten (38) liegenden Klemmkörper (43) beidseitig überragt und mit auf seiner Rückseite liegenden Balkenschultern (42) einen Anschlag bildet, der in der Öffnungsstellung am zugeordneten Ende der Führungsleisten (38) anliegt.

7. Vorrichtung nach einem der vorhergehenden Ansprüche, dadurch gekennzeichnet, daß das Klemmteil (4) erste Führungsschienen (46) besitzt, die eine Gleitbewegung zwischen den Führungsleisten (38) in den Führungsnuten (39) ermöglichen und daß diese Gleitbewegung durch einen Anschlag begrenzt ist, den mindestens ein Gleithaken (44) bildet, der beim Einschieben des Klemmteils (4) in die Führungsnuten (39) in ein Rastloch (302) eingreift und in Klemmrichtung ein unerwünschtes Herausgleiten aus den Führungsnuten (39) verhindert.

8. Vorrichtung nach einem der vorhergehenden Ansprüche, dadurch gekennzeichnet, daß im Klemmkörper (43) des Klemmteils (4) zur Freistellung der Gleithaken (44) Hakenfenster (45) ausgespart sind und zur Aufnahme eines Endes der zwischen dem Klemmteil (4) und dem Arretierteil (5) angeordneten Feder (6) ein Federloch (47) vorgesehen ist.

9. Vorrichtung nach einem der vorhergehenden Ansprüche, dadurch gekennzeichnet, daß am Klemmkörper (43), vorzugsweise im Bereich der ersten Führungsschienen (46) je ein Greifansatz (49) ausgebildet ist, an dem ein Greifarm (53) des Arretierteils (5) angreifen kann.

10. Vorrichtung nach einem der vorhergehenden Ansprüche, dadurch gekennzeichnet, daß das Arretierteil (5) entsprechend dem Klemmteil (4) mit zweiten Führungsschienen (501) in den Führungsnuten (39) gleitbeweglich angeordnet ist und die zur Kopplung mit dem Klemmteil (4) dienenden Greifarme (53) an ihrem dem Klemmteil (4) zugewandten Ende mit Greifhaken (54) und an ihrem am Gleitkörper (51) befestigten Ende mit Greifarmschultern (55) versehen sind und daß letztere zusammen mit einem in jeder Führungsnut (39) ausgebildeten Nutanschlag (301) in Öffnungsrichtung ein Herausgleiten des Arretierteils (5) aus der Führungsnut (39) verhindern.

11. Vorrichtung nach einem der vorhergehenden Ansprüche, dadurch gekennzeichnet, daß das Arretierteil (5) eine in einem Laschenfenster (58) schwingbeweglich angeordnete federnde Arretierlasche (52) besitzt, die mindestens mit einem Rastzahn (56, 57) versehen ist, der in eine Rastmulde (303) eingreift und an einer Anschlagkante (306) anschlägt und daß am freien Ende der Arretierlasche (52) ein Betätigungssteg (504) vorgesehen ist, der einen Zugriff solcher Art erlaubt, daß die Arretierlasche (52) entgegen ihrer Federkraft aus ihrer Anschlagstellung befreit wird und damit eine erneute Verschiebung des Arretierteils (5) ermöglicht.

12. Vorrichtung nach einem der vorhergehenden Ansprüche, dadurch gekennzeichnet, daß das Arretierteil (5) in der dritten Stellung der beiden Teile (4, 5) mit seinem freien Ende über die Grundfläche des Gehäusekörpers (1) hinausragt und in dieser Stellung die Möglichkeit bietet den Gehäusekörper (1) vorzugsweise mit Hilfe entspechender Löcher (502, 503), an einer Wand- oder Bodenfläche ohne Profilschiene zu befestigen, und daß an der dem Klemmteil (4) zugewandten Seite des Gleitkörpers (51) ein Federraum (59) zur Aufnahme des anderen Endes der Feder (6) dient.

13. Vorrichtung nach einem der vorhergehenden Ansprüche, dadurch gekennzeichnet, daß das Klemmteil (4) und das Arretierteil (5) an einem Schienenhalter (3) befestigt sind, der mit den hierzu erforderlichen Befestigungsmitteln wie Führungsleisten (38) und Führungsnuten (39) versehen ist, und der weiterhin so ausgebildet ist, daß sich ein austauschbarer Befestigungsadapter (3-6) ergibt, der auf der Außenseite eines mit Haltezapfen (201) versehenen Bodenteils (2) lösbar befestigt ist.

14. Vorrichtung nach einem der vorhergehenden Ansprüche, dadurch gekennzeichnet, daß das Bodenteil (2) zur Befestigung am Gehäusekörper (1) des Gerätegehäuses (1, 2) von mindestens einer Seite des Gehäuses aus auf den Gehäusekörper (1) aufschiebbar ist, wobei am Gehäusekörper (1) einerseits und an dem Bodenteil (2) andererseits ineinandergreifende Gleitschienen (11) und Gleitnuten (21) vorgesehen sind.

15. Vorrichtung nach einem der vorhergehenden Ansprüche, dadurch gekennzeichnet, daß das Bodenteil (2) aus zwei, vorzugsweise identisch ausgebildeten, Bodenhalbteilen (2a, 2b) besteht, die von zwei sich gegenüberliegenden Seiten auf den Gehäusekörper (1) aufgeschoben werden und in der Mitte des Bodenteils (2) mit Stoßkanten (22) aufeinandertreffen.

16. Vorrichtung nach einem der vorhergehenden Ansprüche, dadurch gekennzeichnet, daß das Bodenteil (2) die Form einer flachen Schale besitzt, die durch eine Bodenwand (23) und Seitenwände (24) gebildet ist und die nur bei einer Trennung in die beiden Bodenhalbteile (2a, 2b) an einer Seite zum Aufschieben geöffnet ist, und die ineinandergreifenden Gleitelemente (11, 21) einerseits auf der Innenseite der beiden in Gleitrichtung liegenden Seitenwände (24a, 24b) des Bodenteils (2) und andererseits auf den entsprechenden Außenseiten des Gehäusekörpers (1) vorgesehen sind und eine mäanderförmige Dichtung des Gehäuses bewirken und daß parallel zu den beiden in Gleitrichtung liegenden Seitenwänden (24a, 24b) Leitschienen (25) angeordnet sind, die für die Enden der beiden zugehörigen Gehäusewände (12) eine Laufnut (26) bilden.

17. Vorrichtung nach einem der vorhergehenden Ansprüche, dadurch gekennzeichnet, daß im Bereich der Stoßkante (22) der beiden Bodenhalbteile (2a, 2b) eine Überlappung der zugehörigen Bodenwände (23) erfolgt, vorzugsweise derart, daß die beiden Bodenwände (23) im Bereich ihrer Stoßkante (22) jeweils eine Überlappungszunge (27) besitzen, die die halbe Breite und die halbe Wanddicke der Bodenwand (23) besitzen und stufig zueinander versetzt sind, so daß zwei aufeinandertreffende, in ihrer Wandstärke halbierte Überlappungszungen (27) sich zur Wandstärke der übrigen Bodenwand (23) überlappend ergänzen.

18. Vorrichtung nach einem der vorhergehenden Ansprüche, dadurch gekennzeichnet, daß die beiden Bodenhalbteile (2a, 2b) im Bereich ihrer Stoßkante (22) jeweils mit einem Rasthaken (28) und einer den Rasthaken (28) verankernden Rastauflage (29) versehen sind und diese eine selbsthaltende Verbindung der beiden Bodenhalbteile (2a, 2b) ermöglichen.

19. Vorrichtung nach einem der vorhergehenden Ansprüche, dadurch gekennzeichnet, daß auf der Außenseite der Bodenhalbteile (2a, 2b) entlang ihrer Gleitrichtung Haltezapfen (201) angeformt sind, zwischen denen und der Bodenwand (23) Haltenuten (202) liegen, in denen Gleitnocken (31) Platz finden, die ihrerseits am Schienenhalter (3) angeformt sind.

20. Vorrichtung nach Anspruch 19, dadurch gekennzeichnet, daß die Haltezapfen (201) und die Gleitnocken (31) jeweils in einem solchen Abstand zueinander angeordnet sind, daß bei einem sich senkrecht zur Ebene der Bodenwand (23) vollziehenden Fügevorgang die Gleitnocken (31) zwischen den Haltezapfen (201) Platz finden und durch eine parallel zur Ebene der Bodenwand (23) ausgeführte Verschiebung in den Haltenuten (202) bis zu einem Anschlag bei gleichzeitiger Verriegelung, eine Befestigung des Schienenhalters (3) am Bodenteil (2) erfolgt.

21. Vorrichtung nach einem der vorhergehenden Ansprüche, dadurch gekennzeichnet, daß zur Arretierung der Grundstellung des am Bodenteil (2) befestigten Schienenhalters (3) eine Federlasche (33) dient, die in einer Grundplatte (32) des Schienenhalters (3) durch eine Aussparung (34) freigelegt ist und die eine Vertiefung (35) besitzt, in die je ein im Bereich der Stoßkante (22) an dem jeweiligen Bodenhalbteil (2a, 2b) angeformter, über die Ebene der Bodenwand (23) hinausragender Haltenocken (203) eintaucht und daß die Vertiefung (35) durch das Erfassen der beiden Haltenocken (203) auch die zugehörigen Bodenhalbteile (2a, 2b) zusammenhält.

## Claims

1. Device for the detachable securing of a device casing (1, 2) to a profiled rail (7), preferably a cover rail, which is mounted on a wall or floor surface, with clamping parts (4) which grip the profiled rail (7) in a tongs-like manner and slide on guide beads (38) and which are retained in their clamped position by means of spring force and, for the purpose of detaching them, are displaceable into an open position against the action of this spring force, wherein at least one stop part (5) which is displaceable in relation to the device casing (1, 2) is provided, which can be anchored in at least two different positions in relation to the casing, and wherein a spring (6) is disposed between the stop part (5) and the clamping part (4), characterised in that the stop part (5) is coupled to the clamping part (4) in such a manner that the mutual distance of both parts (4, 5) can be altered in at least two positions by displacement of the stop part; and in that in one of these positions the clamp part (4) is blocked by the stop part in such a manner that this cannot be displaced into the open position to release the device casing (1, 2) from the profiled rail (7).

2. Device according to Claim 1, characterised in that the clamping part (4) and the stop part (5) are pushed together through two guide beads (38) into the guide grooves (39) which are formed thereby in the displacement direction, and at least one gripping arm (53) engages on the one part on a gripping projection (49) of the other part in such a manner, that as a result hereof the maximum difference between the two parts (4, 5) is defined, and this distance can only be reduced by displacing the two parts (4, 5) towards one another, against the spring force of a spring, preferably a helical spring, which presses them apart from one another.

3. Device according to any one of the preceding claims, characterised in that the different settings of the two parts (4, 5) in relation to one another are determined by different abutment stops (56, 57, 306), which, for the alteration of the position, are optionally formed by resilient engaging means (52); and in that in a first position which blocks the clamping part (4), the stop part (5) is brought so tightly against the clamping part (4) that it blocks the displacement thereof into the open position.

4. Device according to any one of the preceding claims, characterised in that in a second setting the distance between the two parts (4, 5) is established such that the clamping part (4) can be displaced into the open position against the force of the spring (6) which holds the two parts (4, 5) apart.

5. Device according to any one of the preceding claims, characterised in that in a third setting the distance between the two parts (4, 5) corresponds to the maximum distance between the two parts (4, 5) which is determined by at least one gripping arm (53), and, in this position, by means of a common displacement of the two parts (4, 5), the clamping part (4) may be displaced into the open position without overcoming a spring force.

6. Device according to any one of the preceding claims, characterised in that the clamping part (4) comprises a wedge beam (41) which is optionally interrupted by a recess (401), which, as a result of its advantageously prismatic shape, forms a clamping edge (402) grasping the profiled rail (7) and projects on both sides over a clamping body (43) which likewise belongs to the clamping part (4) and is located between the guide beads (38), and forms, together with girder shoulders (42) located at its rear side, an abutment which, in the open position, contacts the associated end of the guide bead (38).

7. Device according to any one of the preceding claims, characterised in that the clamping part (4) comprises first guide rails (46), which render possible a sliding movement between the guide beads (38) in the guide grooves (39); and in that this sliding movement is delimited by an abutment stop, which forms at least one sliding hook (44), which, when the clamping part (4) is pushed into the guide grooves (39), engages in an engaging aperture (302) and prevents an undesired sliding out from the guide grooves (39) in the clamping direction.

8. Device according to any one of the preceding claims, characterised in that to make the sliding hooks accessible hook windows (45) are left in the clamping body (43) of the clamping part (4), and a spring aperture (47) is provided to accommodate one end of the spring (6) which is disposed between the clamping part (4) and the stop part (5).

9. Device according to any one of the preceding claims, characterised in that on the clamping body (43), preferably in the vicinity of the first groove rail (46), there is formed, in each case, a gripping projection (49) on which a gripping arm (53) of the stop part (5) can grip.

10. Device according to any one of the preceding claims, characterised in that the stop part (5) is, corresponding to the clamping part (4), disposed in a slidably movable manner with second guide rails (504) in the guide grooves (39), and the gripping arms (53) which serve for the coupling to the clamping part (4) are provided at their end facing the clamping part (4) with gripping hooks (54) and at their end which is secured on the sliding body (51) with gripping arm shoulders (55); and in that the latter, together with a groove abutment (301) formed in each guide groove (39) prevent a sliding out of the stock part (5) from the guide grooves (39) in the opening direction.

11. Device according to any one of the preceding claims, characterised in that the stop part (5) comprises a resilient stop bracket (52) which is disposed in a pivotably movable manner on a bracket window (58) and which is provided with at least one engaging tooth (56, 57), which engages in an engaging groove (303) and abuts on an abutment edge (306) and in that on the free end of the stop bracket (52) an actuation web (504) which permits an access of such a type that the stop bracket (52) is released against its spring force out of its abutment position and thus renders a renewed displacement of the stop part (5) possible.

12. Device according to any one of the preceding claims, characterised in that in the third position of the two parts (4, 5), the stop part (5) projects with its free end over the base surface of the casing body (1) and in this position the casing body (1) offers, preferably with the aid of corresponding apertures (502, 503), to a secure a profiled rail to a wall or floor surface; and in that on the side of the sliding body (51) which is turned towards the clamping part (4) a spring chamber (59) is provided for accommodating the other end of the spring (6).

13. Device according to any one of the preceding claims, characterised in that the clamping part (4) and the stop part (5) are secured to a rail holder (3), which is provided with the securing means such as guide beads (38) and guide grooves (39) which are necessary for this purpose, and which is, furthermore, formed such that there results an exchangeable securing adaptor (3-6), which is secured detachably on the external side of a floor part (2) provided with mounting pins (201).

14. Device according to any one of the preceding claims, characterised in that the floor part (2) may, to secure the casing body (1) of the casing housing (1, 2) be pushed onto the casing body (1), from at least one side of the casing wherein, there are provided on the casing body (1) on the one hand, and on the floor part (2) on the other hand, slide rails (11) which engage in one another and slide grooves (21).

15. Device according to any one of the preceding claims, characterised in that the floor part (2) consists of two floor half parts (2a, 2b) which are advantageously identically formed and which are pushed onto the casing body (1) from opposite sides and contact one another in the centre of the floor part (2) with abutting edges (22).

16. Device according to any one of the preceding claims, characterised in that the floor part (2) has the shape of a flat dish, which is formed by a floor wall (23) and side walls (24) and which is only opened in the case of a separation into the two floor half parts (2a, 2b) on one side for pushing on, and the sliding elements (11, 21) which engage in one another are provided on the one hand on the inner side of the two side walls (24a, 24b) of the floor part (2) which extend in the sliding direction and on the other hand on the corresponding external sides of the housing body (1), and form a meander-shaped seal of the casing; and in that, parallel to the two side walls (24a, 24b) which extend in the slide direction, there are disposed guide rails (25) which form a running groove (26) for the ends of the two associated casing walls (12).

17. Device according to any one of the preceding claims, characterised in that in the vicinity of the abutment edge (22) of the two floor half parts (2a, 2b), an overlapping of the associated floor walls (23) occurs, preferably in such a manner that the two floor walls (23) each comprise an overlapping tongue (27) in the vicinity of the abutting edge (22) thereof which tongues have half the width and half the wall thickness of the base wall (23) and are offset in relation to one another in a stepped manner, such that two overlapping tongues (27) which engage on one another and are halved as regards their wall strength form the wall strength of the remaining floor wall (23) in an overlapping manner.

18. Device according to any one of the preceding claims, characterised in that the two floor half parts (2a, 2b) are provided, in the vicinity of their abutting edges (22), with an engaging hook (28) in each case, and an engaging abutment (29) which anchors the engaging hook (28), and that these render possible a self-retaining connection of the two floor half parts (2a, 2b).

19. Device according to any one of the preceding claims, characterised in that on the external side of the floor half parts (2a, 2b) along the sliding direction thereof, there are formed retaining pins (201), between which and the floor wall (23) retaining grooves (202) are located, in which the sliding cams (31) are located, which cams are, on their side, formed on the rail holder (3).

20. Device according to Claim 19, characterised in that the retaining pins (201) and the sliding cams (31) are, in each case, disposed at a distance from one another such that in the case of a fixing process which is performed perpendicular to the plane of the floor wall (23) the sliding cams (31) are located between the retaining pins (201) and, as a result of a displacement which is formed parallel to the plane of the floor wall (23) into the retaining grooves (202) up until a stop with simultaneous locking, a securing of the rail holders (3) on the floor part (2) is performed.

21. Device according to any one of the preceding claims, characterised in that a spring bracket (33) serves to stop the basic setting of the rail holder (3) which is secured on the floor part (2), which spring bracket is made available in a base plate (32) of the rail holder (3) by means of a cutout (34) and which comprises a recess (35) in which a retaining cam (203) fits, which cam is, in each case, formed in the vicinity of the abutting edge (22) on the floor half part (2a, 2b); and in that the recess (35) also holds the associated floor half part (2a, 2b) together by grasping the two retaining cams (203).

## Revendications

1. Dispositif pour la fixation détachable d'un boîtier d'appareil (1, 2) à un profilé (7), de préférence un profilé en chapeau, qui est monté contre une surface de mur ou de sol, comprenant des éléments de serrage (4) qui saisissent le profilé (7) en tenaille, qui coulissent sur des réglettes de guidage (38), qui sont maintenus dans leur position de serrage par une force élastique, et qu'on peut placer par translation dans une position d'ouverture, à l'encontre de l'action de cette force élastique, pour le desserrage, cependant qu'il est prévu au moins un élément d'arrêt (5) qui peut coulisser par rapport au boîtier (1, 2) de l'appareil, et qui peut être ancré dans au moins deux positions différentes par rapport au boîtier (1, 2), et qu'un ressort (6) est agencé entre l'élément d'arrêt (5) et l'élément de serrage (2),
caractérisé
en ce que l'élément d'arrêt (5) est couplé à l'élément de serrage (4) de manière que l'écartement mutuel de ces deux éléments (4, 5) puisse être modifié en plaçant l'élément d'arrêt (5) dans au moins deux positions par coulissement, et en ce que, dans l'une de ces positions, l'élément de serrage (4) est bloqué par l'élément d'arrêt de manière qu'on ne puisse pas le placer par translation dans la position d'ouverture pour détacher le boîtier (1, 2) de l'appareil du profilé (7).

2. Dispositif selon la revendication 1, caractérisé en ce que l'élément de serrage (4) et l'élément d'arrêt (5) sont guidés en commun dans la direction de translation entre deux réglettes de guidage (38), dans les rainures de guidage (39) formées par ces réglettes, et au moins un bras de prise (53) d'un des éléments attaque un talon de prise (49) de l'autre élément de manière que ceci définisse l'écartement maximal entre les deux éléments (4, 5), et cet écartement ne peut être réduit que par translation des deux éléments (4, 5) l'un vers l'autre, à l'encontre de la force élastique d'un ressort (6), de préférence un ressort hélicoïdal, qui les écarte.

3. Dispositif selon l'une des revendications précédentes, caractérisé en ce que les différentes positions des deux éléments (4, 5) l'un par rapport à l'autre sont déterminées par différentes butées (56, 57, 306) qui sont formées éventuellement par des moyens d'encliquetage élastiques (52), pour permettre une modification de position, et en ce que, dans une première position, qui bloque l'élément de serrage (4), l'élément d'arrêt (5) est amené suffisamment près de l'élément de serrage (4) pour bloquer la translation de ce dernier qui le placerait dans la position d'ouverture.

4. Dispositif selon l'une des revendications précédentes, caractérisé en ce que, dans une deuxième position, l'écartement entre les deux éléments (4, 5) est calculé de manière que l'élément de serrage (4) puisse être poussé dans la position d'ouverture à l'encontre de la force du ressort (6) qui écarte les deux éléments (4, 5).

5. Dispositif selon l'une des revendications précédentes, caractérisé en ce que, dans une troisième position, l'écartement entre les deux éléments (4, 5), correspond à l'écartement maximal entre les deux éléments (4, 5) qui est déterminé par au moins un bras de prise (53), et, dans cette position, l'élément de serrage (4) peut être poussé dans la position d'ouverture par translation conjointe des deux éléments (4, 5) sans avoir à surmonter une force de ressort.

6. Dispositif selon l'une des revendications précédentes, caractérisé en ce que l'élément de serrage (4) possède une poutre en coin (41) éventuellement interrompue par un évidement (401) et qui forme, par sa forme de préférence prismatique, une arête de serrage (402) qui saisit le profilé (7), déborde des deux côtés au-delà d'un corps de serrage (43) appartenant lui aussi à l'élément de serrage (4) et situé entre les réglettes de guidage (8), et forme, par des épaulements de poutre (42) situés sur sa face arrière, une butée qui est en appui contre l'extrémité correspondante des réglettes de guidage (38) dans la position d'ouverture.

7. Dispositif selon l'une des revendications précédentes, caractérisé en ce que l'élément de serrage (4) possède des premiers rails de guidage (46) qui permettent un mouvement coulissant entre les réglettes de guidage (38) dans les rainures de guidage (39), et en ce que ce mouvement coulissant est limité par une butée que forme au moins un crochet coulissant (44) qui, lorsqu'on engage l'élément de serrage (4) dans les rainures de guidage (39), s'engage dans un trou d'encliquetage (302) et interdit tout glissement indésirable hors des rainures de guidage (39) dans le sens du serrage.

8. Dispositif salon l'une des revendications précédentes, caractérisé en ce que des fenêtres de crochets (45) sont ménagées dans le corps de serrage (43) de l'élément de serrage (4) pour dégager les crochets coulissants (44), et un trou de ressort (47) est prévu pour recevoir une extrémité du ressort (6) agencé entre l'élément de serrage (4) et l'élément d'arrêt (5).

9. Dispositif selon l'une des revendications précédentes, caractérisé en ce que sur le corps de serrage (43) est formé, de préférence dans la région de chacun des premiers rails de guidage (46), un talon de prise (49) qui peut être attaqué par un bras de prise (53) de l'élément d'arrêt (5).

10. Dispositif selon l'une des revendications précédentes, caractérisé en ce que l'élément d'arrêt (5) est agencé mobile en coulissement dans les rainures de guidage (39), de la même façon que l'élément de serrage (4), à l'aide de deuxièmes rails de guidage (501), et les bras de prise (53) servant à l'accouplement à l'élément de serrage (4) sont munis de crochets de prise (54) à leur extrémité dirigée vers l'élément de serrage (4) et d'épaulements (55) de bras de prise à leur extrémité fixée au corps coulissant (51) et en ce que ces derniers, en combinaison avec une butée de rainure (301) formée dans chaque rainure de guidage (39), empêchent l'élément d'arrêt (5) de s'échapper de la rainure de guidage (39) en glissant dans le sens de l'ouverture.

11. Dispositif selon l'une des revendications précédentes, caractérisé en ce que l'élément d'arrêt (5) possède une patte d'arrêt élastique (52) qui est disposée mobile en pivotement dans une fenêtre de patte (58), et qui est munie d'au moins une dent d'encliquetage (56, 57) qui s'engage dans une cavité d'encliquetage (303) et bute contre un bord de butée (306), et en ce qu'à l'extrémité libre de la patte d'arrêt (52) est prévue une languette d'actionnement (504) qui permet d'accéder de telle manière que la patte d'arrêt (52) soit libérée de sa position de butée à l'encontre de sa force de ressort et permettre de cette façon de faire de nouveau coulisser l'élément d'arrêt (5).

12. Dispositif selon l'une des revendications précédentes, caractérisé en ce que, dans la troisième position des deux éléments (4, 5), l'élément d'arrêt déborde par son extrémité libre au-delà de la surface de base du corps (1) du boîtier et, dans cette position, apporte la possibilité de fixer le corps (1) du boîtier, de préférence à l'aide de trous correspondants (502, 503), à une surface de mur ou de sol sans profilé, et en ce que, sur le côté du corps coulissant (51) qui est dirigé vers l'élément de serrage (4), une chambre de ressort (59) sert à recevoir l'autre extrémité du ressort (6).

13. Dispositif selon l'une des revendications précédentes, caractérisé en ce que l'élément de serrage (4) et l'élément d'arrêt (5) sont fixés à un support de profilé (3) qui est muni des moyens de fixation nécessaires pour cela, tels que des réglettes de guidage (38) et des rainures de guidage (39), et qui est par ailleurs configuré de manière à former un adaptateur de fixation interchangeable (3 à 6) qui est fixé de façon détachable sur le côté extérieur d'un élément de fond (2) muni de pattes de retenue (201).

14. Dispositif selon l'une des revendications précédentes, caractérisé en ce que, pour la fixation au corps (1) du boîtier (1, 2) de l'appareil, l'élément de fond (2) peut être emboîté sur le corps (1) du boîtier en partant d'au moins un côté du boîtier, des rails de coulissement (11) et des rainures de coulissement (21) s'emboîtant les uns dans les autres étant prévues, d'une part, sur le corps (1) du boîtier et, d'autre part, sur l'élément de fond (2).

15. Dispositif selon l'une des revendications précédentes, caractérisé en ce que l'élément de fond (2) est composé de deux demi-éléments de fond (2a, 2b), de préférence de configuration identique, qui sont emboîtés sur le corps (1) du boîtier, à partir de deux côtés opposés, et se rejoignent par des bords de joint (22) au milieu de l'élément de fond (2).

16. Dispositif selon l'une des revendications précédentes, caractérisé en ce que l'élément de fond (2) possède la forme d'une coquille plate qui est formée par une paroi de fond (23) et des parois latérales (24) et qui n'est ouverte pour l'emboîtement, sur un côté, que lorsqu'on la divise en les deux demi-éléments de fond (2a, 2b) sur un côté, et les éléments de coulissement (11, 21) qui s'emboîtent les uns dans les autres sont prévus, d'une part, sur le côté intérieur des deux parois latérales (24a, 24b) de l'élément de fond (2) qui se trouvent dans la direction du coulissement et, d'autre part, sur les côtés extérieurs correspondants (1) du corps du boîtier, et forment un joint à labyrinthe du boîtier, et en ce que, parallèlement aux deux parois latérales (24a, 24b) qui sont situées dans la direction du coulissement, sont disposées des rails directeurs (25) qui forment une rainure de circulation (26) pour les extrémités des deux parois correspondantes (12) du boîtier.

17. Dispositif selon l'une des revendications précédentes, caractérisé en ce que, dans la région du bord de joint (22) des deux demi-éléments de fond (2a, 2b), se produit un recouvrement des parois correspondantes (23) du fond, de préférence de manière que les deux parois (23) du fond possèdent, chacune dans la région de son bord de joint (22), une languette de recouvrement (27) qui possède la moitié de la largeur et la moitié de l'épaisseur de la paroi de fond (23), et sont décalées l'une par rapport à l'autre en escalier, de sorte que deux languettes de recouvrement (27) qui se recouvrent et qui sont diminuées de moitié en épaisseur de paroi se complètent en se recouvrant pour obtenir l'épaisseur de paroi du reste de la paroi de fond (23).

18. Dispositif selon l'une des revendications précédentes, caractérisé en ce que, dans la région de leur bord de joint (22), les deux demi-éléments de fond (2a, 2b) sont munis chacun d'un crochet d'encliquetage (28) et d'un appui d'encliquetage (29) qui ancre le crochet d'encliquetage (28), et ce crochet et cet appui permettent d'obtenir un assemblage auto-maintenu des deux éléments de fond (2a, 2b).

19. Dispositif selon l'une des revendications précédentes, caractérisé en ce que, sur le côté extérieur des demi-éléments de fond (2a, 2b), sont formées, le long de leur direction de coulissement, des pattes de retenue (201), et entre celles-ci et la paroi de fond (23) se trouvent des rainures de retenue (202) dans lesquelles trouvent place des bossages coulissants (31) qui, de leur côté, sont venus de moulage sur le support de barre (3).

20. Dispositif selon la revendication 19, caractérisé en ce que les pattes de retenue (201) et les bossages coulisants (31) sont disposés à un écartement mutuel tel que, dans le cas d'une opération d'assemblage qui s'effectue perpendiculairement au plan de la paroi de fond (23), les bossages coulissants (31) trouvent place entre les pattes de retenue (201) et il se produit une fixation du support de profilé (3) à l'élément de fond (2) par une translation exécutée parallèlement au plan de la paroi de fond (23) dans les rainures de retenue (202) jusqu'à une butée, avec verrouillage simultané.

21. Dispositif selon l'une des revendications précédentes, caractérisé en ce que, pour arrêter la position de base du support de profilé (3) fixé à l'élément de fond (2), on a prévu une languette élastique (33) qui est dégagée dans une plaque de base (32) du support de profilé (33) par une échancrure (34) et qui possède un renfoncement (35) dans lequel plonge un bossage de retenue (203) venu de matière dans la région du bord de joint (22) sur le demi-élément de fond correspondant (2a, 2b), et qui déborde au-delà du plan de la paroi de fond (23), et en ce que le renfoncement (35) maintient aussi les demi-éléments de fond (2a, 2b) correspondants en saisissant les deux bossages de retenue (203).
